# EUROPEAN PATENT SPECIFICATION

(11) **EP 2 732 698 B1**
(45) Date of publication and mention of the grant of the patent: **08.06.2016**
(21) Application number: 12812120.9
(22) Date of filing: 11.07.2012
(51) Int. Cl.: A01K 1/01

(54) **URINE TREATMENT DEVICE FOR PET ANIMAL**
URINBEHANDLUNGSVORRICHTUNG FÜR HAUSTIERE
DISPOSITIF DE TRAITEMENT D'URINE POUR ANIMAL DE COMPAGNIE

(30) Priority: 13.07.2011 JP 2011155247
(43) Date of publication of application: 21.05.2014
(73) Proprietor: Unicharm Corporation, Ehime 799-0111 (JP)
(72) Inventor: KOMURO, Yumei, Kanonji-shi Kagawa 769-1602 (JP); IKEGAMI, Takeshi, Kanonji-shi Kagawa 769-1602 (JP); SASANO, Yasuhiro, Kanonji-shi Kagawa 769-1602 (JP)
(74) Representative: Peter, Julian
(86) International application number: PCT/JP2012/067750
(87) International publication number: WO 2013/008863

(56) References cited:
- JP-A- 2001 008 568
- JP-A- 2002 000 099
- JP-A- 2008 199 998
- JP-A- 2010 119 313
- JP-U- 63 178 451

## Description

### {Technical Field}

The present invention relates to pet urine collection devices suitable for collection of urine discharged by pet animals such as dogs and cats, particularly by pet animals raised indoors.

### {Background}

Conventionally, pet urine collection devices raised indoors are known. A urine shield used for male dogs disclosed in JP 1988-178451 U (PTL 1) is an example of the pet urine collection device and includes a cover made of polychlorinated vinyl and a sheet-like water absorbent structure. The polychlorinated vinyl cover is folded in an L-shape so that the cover may be attached to a floor surface and a wall surface with adhesive tape provided on the underside surface thereof. The polychlorinated vinyl cover is provided on the upper surface with a water-absorbent structure adapted to absorb urine discharged from a dog.

An excrement absorbent sheet disclosed in JP 2001-8568 A (PTL 2) includes an absorbent mat to be laid on a floor surface and a flap to be set upright along the wall surface. The absorbent mat includes a liquid-permeable topsheet, a liquid-impermeable backsheet and an absorbent core interposed between these two sheets.

### {Citation List}

### {Patent Literature}

{PTL 1}: JP 1988-178451 U
{PTL 2}: JP 2001-8568 A or EP-A-1048206

### {Summary}

### {Technical Problem}

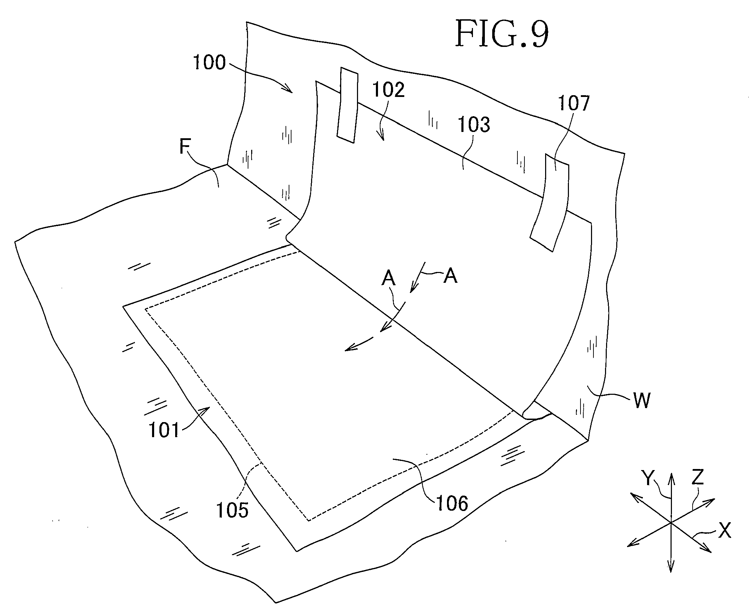

Fig. 9 illustrates a usage pattern for the pet urine collection device. The pet urine collection device 100 includes a first panel 101 on a floor surface F and a second panel 102 having an upper end edge 103 attached to a wall surface W. The first panel 101 includes an absorbent structure 105 formed of absorbent material such as fluff wood pulp between a liquid-permeable topsheet 106 and a liquid-impermeable backsheet (not shown). The second panel 102 is formed from a plastic film, a nonwoven fabric or a laminate of these plastic film and nonwoven fabric and attached to the wall surface W with pressure-sensitive adhesive tapes 107. The second panel 102 may be attached to the wall surface W so as to extend upright from the floor surface F along the wall surface W, but depending on how to work through a process of installing the device, the second panel 102 might sag as illustrated, and such sag might become significant immediately above the first panel 101 until a side geometry of the second panel 102 might be curved in a J-shape as illustrated. If a male dog (not shown) comes in front of such curved pet urine collection device 100 and discharges urine against the second panel 102, the discharged urine might flow through the second panel 102 curved in J-shape forward as viewed in a front-back direction Z as indicated by an arrow A and soil the dog's body. Furthermore, the urine flowing in this manner might transfer forward through the surface of the first panel 101 and soil the first panel 101 over a wide range in the front-back direction Z. In consideration of dog's habit hesitating to set its foot in the first panel 101 soiled with urine, it is undesirable to soil the first panel 101 with urine over a wide range in the front-back direction Z even when an amount of discharged urine is relatively small.

An obj ect of the present invention is to improve the conventional pet urine collection devices so that may prevent the urine discharged from a dog against the second panel attached to the wall surface from transferring forwardly of the pet urine collection device and soiling the dog's body and/or soiling the first panel laid on the floor surface over a wide range in the front-back direction.

### {Solution to Problem}

The present invention relates to a pet urine collection device including a first panel adapted to be laid on a horizontal floor surface and composed of a liquid-permeable topsheet, a liquid-impermeable backsheet and a first absorbent structure interposed between the top- and backsheets and a flexible second panel having a proximal edge joined to the topsheet along a straight join line, a distal edge adapted to be attached to a wall surface vertically extending from the floor surface and a liquid-impermeable sheet extending between the proximal edge and the distal edge.

In such pet urine collection device, the present invention includes the following features: between the proximal edge and the distal edge of the second panel, a high stiffness region having the proximal edge and extending in parallel to the join line and a low stiffness region having the distal edge and extending in parallel to the high stiffness region are formed. In a direction extending from the proximal edge toward the distal edge, a dimension of the high stiffness region is the same to or smaller than a dimension of the low stiffness region.

According to an embodiment of the present invention, the high stiffness region is composedof the liquid-impermeablebacksheet, the liquid-permeable sheet and a second absorbent structure interposed between these two sheets so that the liquid-impermeable sheet faces the wall surface.

According to another embodiment of the present invention, the liquid-impermeable backsheet and the liquid-impermeable sheet are formed, respectively, of one of a sheet of a nonwoven fabric made of thermoplastic synthetic fibers or a sheet of a thermoplastic synthetic resin film.

According to still another embodiment of the present invention, the lower stiffness region is formed from a laminate of the liquid-impermeable sheet and the liquid-permeable sheet.

According to yet another embodiment of the present invention, the high stiffness region extends not only in a direction extending from the proximal edge toward the distal edge but also extends in a reverse direction beyond the join line.

According to further another embodiment of the present invention, the first absorbent structure and the second absorbent structure are contiguous to each other in the reverse direction.

According to an additional embodiment of the present invention, the high stiffness region is formed by attaching a stiffness enhancing member for local enhancement of the stiffness of the second panel to at least one of a surface adapted to face the wall surface when the second panel is attached to the wall surface and a surface opposite to the surface adapted to face the wall surface.

According to another additional embodiment of the present invention, the second panel is provided between the proximal edge and the distal edge thereof with a means to attach the second panel to the wall surface in a manner that the distal edge is located above.

Herein is also provided: preparing a test piece having a length dimension of 10 mm in a direction extending in parallel to the join line, a length dimension of 10 mm in the high stiffness region measured in a direction extending from the distal edge toward the proximal edge and a length dimension of at least 50 mm in the low stiffness region measured in a direction extending from the proximal edge toward the distal edge is prepared by cutting it out from the second panel, and preparing a tester formed with a horizontal surface having a front-back direction and a front edge defined on a front side in this front-back direction and a tilted surface intersecting with the front edge of the horizontal surface at a tilt angle of 45°, then the test piece is placed on the horizontal surface in such a manner that the high stiffness region is located on the front side, the low stiffness region extends backward in the front-back direction and the liquid-impermeable sheet extends on the underside, and when the test piece is slid forward so that the high stiffness region may protrude from the horizontal surface and then extend along the tilted surface, the low stiffness region is smoothly bent on the front edge of the horizontal surface.

As used herein, the terms "first" and "second", for example, "the first panel", "the second panel", "first absorbent structure" and "second absorbent structure" in the pet urine collection device according to the present invention are used to distinguish these two panels clearly from each other and to distinguish these two absorbent structures clearly from each other and used neither to order-sort nor to rank-sort these two panels and absorbent structures, respectively.

### {Advantageous Effects of Invention}

In one or more embodiments of the pet urine collection device according to the present invention, the flexible second panel attached to the wall surface has the high stiffness region extending in parallel to the join line along which the first panel and the second panel are joined to each other and including the proximal edge and the low stiffness region extending in parallel to the high stiffness region and including the distal edge. With such arrangement, the high stiffness region tilts so as to be gradually distanced from the wall surface as a distance in the vertical direction from the proximal edge increases. Urine discharged against the low stiffness region of the second panel transfers downward through the low stiffness region into the high stiffness region and then toward the proximal edge. Urine transferring toward the proximal edge is sufficiently distanced from the pet animal, for example, a dog being discharging urine to prevent a body of this pet animal from being soiled with urine. Urine transferring downward to the proximal edge is directed to the rear side of the pet urine collection device and, in consequence, the front side portion of the pet urine collection device is prevented from being soiled with urine.

### {Brief Description of Drawings}

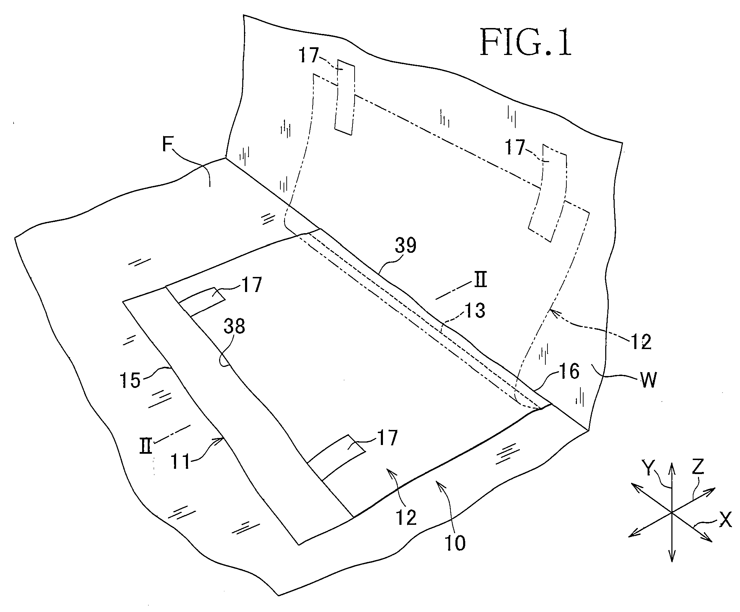

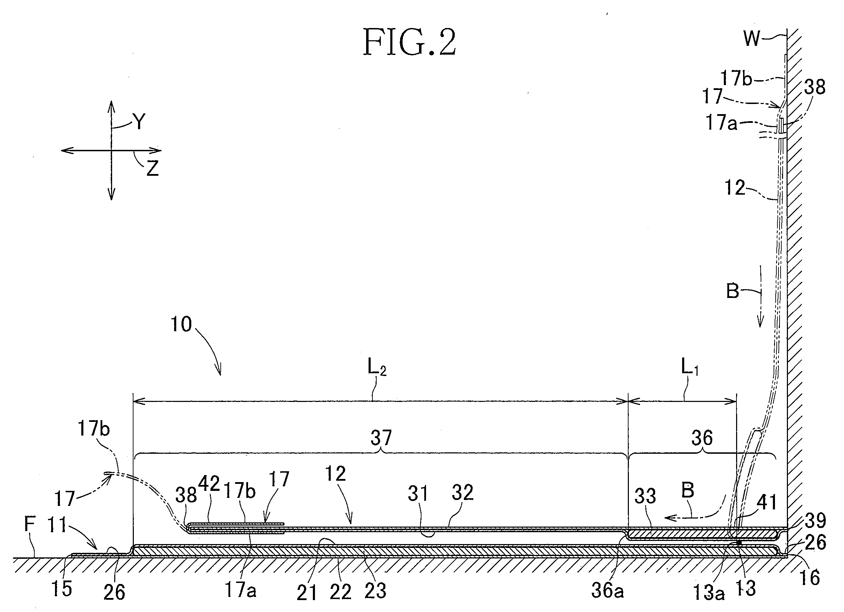

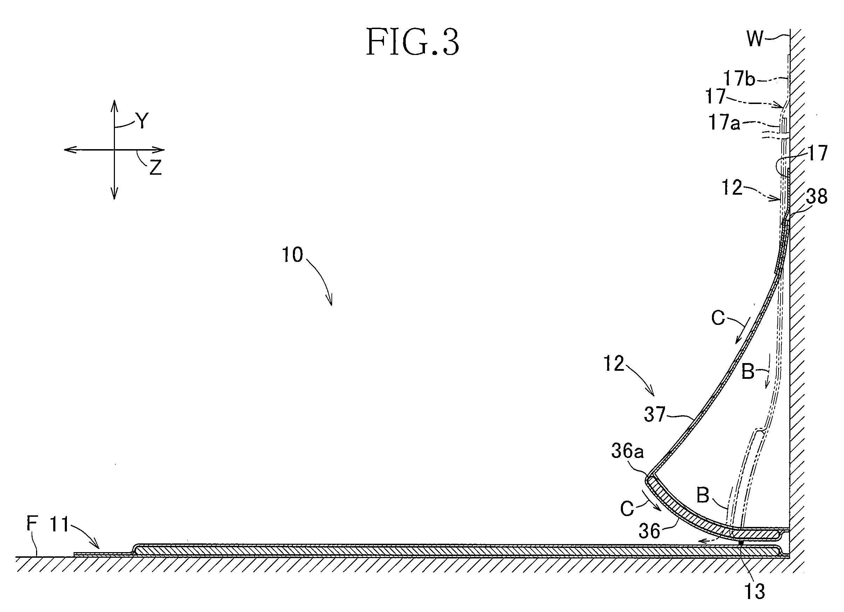

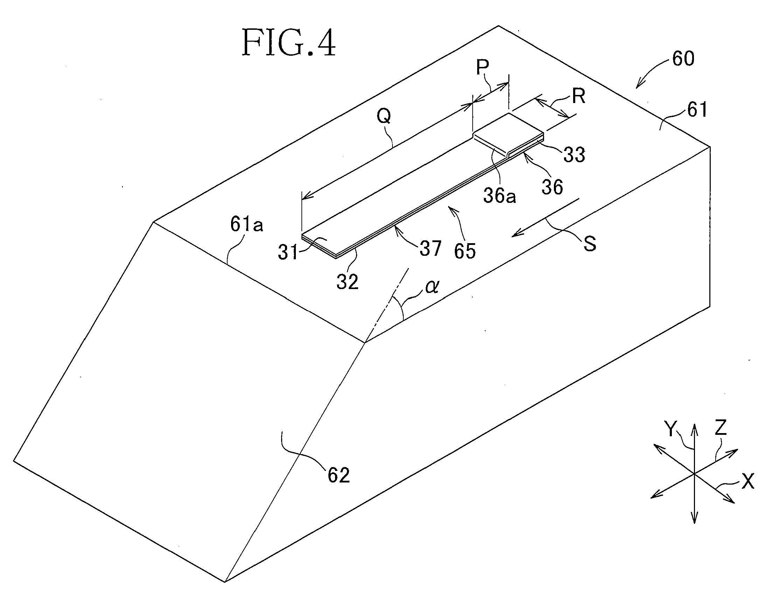

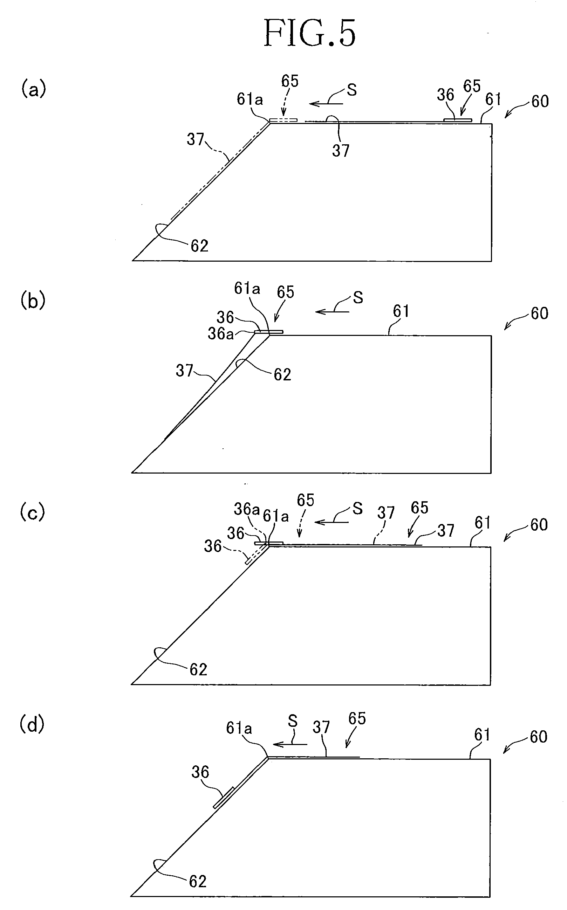

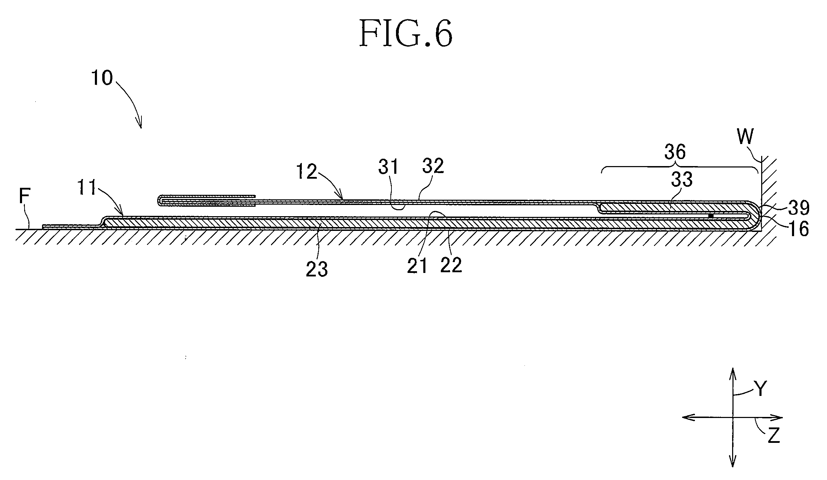

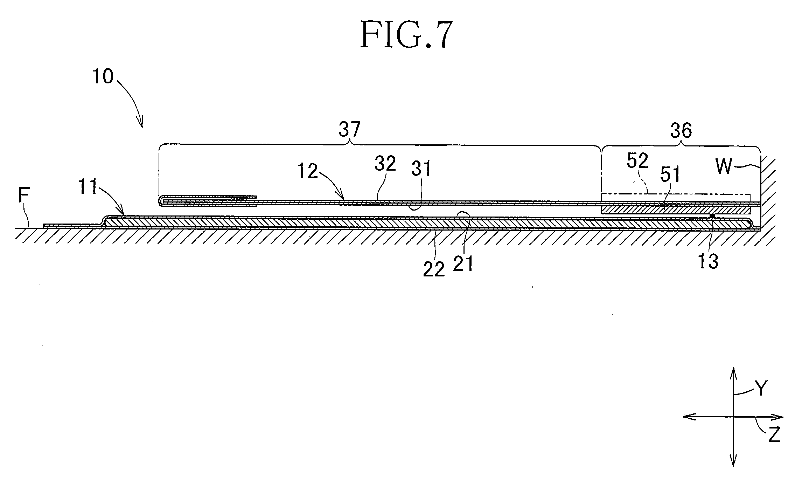

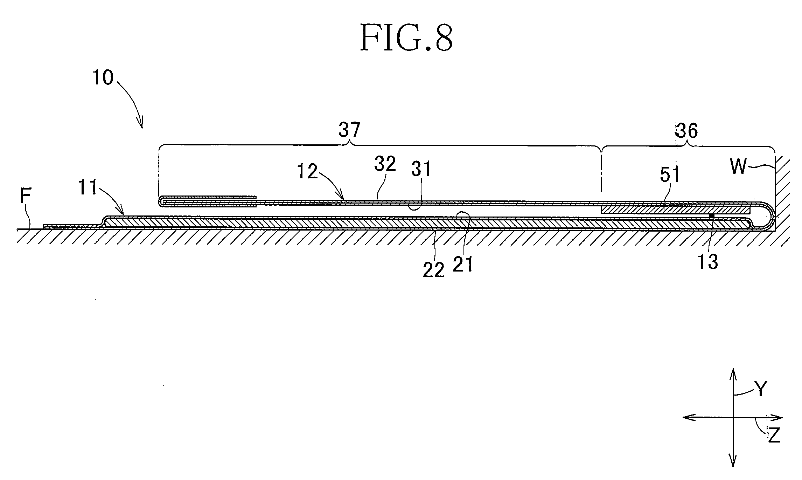

{Fig. 1} Fig. 1 is a perspective view of a pet urine collection device.
{Fig. 2} Fig. 2 is a sectional view taken along line II-II in Fig. 1.
{Fig. 3} Fig. 3 is a view similar to Fig. 2, illustrating a manner in which a second panel is attached.
{Fig. 4} Fig. 4 is a perspective view illustrating a tester and a test piece used to observe behaviors of a high stiffness region and a low stiffness region.
{Fig. 5} Fig. 5 (a) through (d) are a series of schematic diagrams illustrating the behavior of the test piece on the tester.
{Fig. 6} Fig. 6 is a view similar to Fig. 2, illustrating an embodiment.
{Fig. 7} Fig. 7 is a view similar to Fig. 6, illustrating another embodiment.
{Fig. 8} Fig. 8 is a view similar to Fig. 7, illustrating still another embodiment.
{Fig. 9} Fig. 9 is a perspective view illustrating a usage pattern for the pet urine collection device.

### {Description of Embodiments}

The pet urine collection device according to the present invention will be described in more details hereinafter with reference to the accompanying drawings.

Fig. 1 is a partially cutaway perspective view illustrating a pet urine collection device 10 suitable to be used for small male dog raised indoors.

The pet urine collection device 10 includes a rectangular first panel 11 and a rectangular second panel 12 illustrated in an overlapping state and joined to each other along a rectilinearly extending join line 13 indicated by chain line. In a state laid on a floor surface F, a transverse direction, a front-back direction and a vertical direction of the pet urine collection device 10 are respectively indicated by X, Z, Y. A wall surface W vertically stands from the floor surface F and a rear end 16 of the first panel 11 is kept in contact with the wall surface W. The second panel 12 is flexible and adapted to be raised up toward the wall surface W in a posture reflexed toward the wall surface W as indicated by an imaginary line and to be attached to the wall surface W with use of pressure-sensitive adhesive tape 17 as an example of attachments provided on the second panel 12. As usedherein, the expression "the secondpanel 12 is flexible" means that the second panel 12 may be raised up, as illustrated, in the posture reflexed toward the wall surface W by gripping a front end edge 38 (See Fig. 2).

Fig. 2 is a sectional view taken along line II-II in Fig. 1, indicating a manner in which the second panel 12 is attached to the wall surface W as illustrated also in Fig. 1 herein by an imaginary line. In the pet urine collection device 10 illustrated in Fig. 2, the first panel 11 includes a liquid-permeable first topsheet 21, a liquid-impermeable first backsheet 22 and a liquid-absorbent first absorbent structure 23 interposed between these two sheets 21, 22. The first top sheet 21 and the first back sheet 22 extend outward beyond a periphery of the first absorbent structure 23 and are put flat and bonded together by sealing or adhesion on the outside of the periphery to form a peripheral flap 26. The first panel 11 having a front end 15 and a rear end 16 is preferably utilized in a state in which the rear end 16 is kept in contact with the wall surface W. At the rear end 16, a second backsheet 32 is provided with a pressure-sensitive adhesive region to attach the second backsheet 32 to the floor surface F in a peelable manner.

The second panel 12 includes a liquid-permeable second topsheet 31, a liquid-impermeable second backsheet 32 and a liquid-absorbent second absorbent structure 33. The second topsheet 31 and the second backsheet 32 extend outward beyond a periphery of the second absorbent structure 33 and are put flat and bonded together by sealing or adhesion on the outside of the periphery. In the front-back direction Z of the second panel 12, the second topsheet 31, the second absorbent structure 33 and the second backsheet 32 are layered together to form a high stiffness region 36 and the second topsheet 31 and the second backsheet 32 are layered one upon another in front of the high stiffness region 36 to form a low stiffness region 37. The second panel 12 also has a front end 38 and a rear end 39 both extending in the width dimension X and, in the front-back direction Z, the front end 38 is positioned behind the front end 15 of the first panel 11 and the rear end 39 is positioned approximately aligned in the vertical direction with the rear end 16 of the first panel 11 in the vertical direction. In this regard, it is possible for the second panel 12 to have the front end 38 approximately aligned with the front end 15 of the first panel 11 in the vertical direction or to have the front end 38 positioned further outward of the front end 15 of the first panel 11. It is also possible for the second panel 12 to have the rear end 39 positioned in front of the rear end 16 of the first panel 11.

The first panel 11 and the second panel 12 formed in this manner is integrated by joining at least the first topsheet 21 and the second topsheet 31 to each other with use of sealing or bonding technique along the join line 13. In the front-back direction Z of the second panel 12, the join line 13 extends across the high stiffness region 36 to define a length dimension L1 extending from a front surface 13a of the join line 13 to a front end 36a of the high stiffness region 36 and a length dimension L2 extending from the front end 36a to the front end 38 of the second panel 12 wherein the dimension L1 is equal to or smaller than the dimension L2. In this regard, the length dimension L1 is not smaller than 10 mm.

A combination of the first panel 11 indicated by solid lines and the second panel 12 indicated by imaginary lines suggests a usage pattern of the pet urine collection device 10. The first panel 11 is kept in contact with the floor surface F over the entire area of the first backsheet 22. The second panel 12 rectilinearly extends approximately along the wall surface W at a small tilt angle relative to the wall surface W. The second panel 12 includes, in addition, a proximal edge 41 overlapping the join line 13 and a distal edge 42 attached to the wall surface W through the pressure-sensitive adhesive tape 17. The distal edge 42 is the region having the front end 38 in Fig. 2. The pressure-sensitive adhesive tape 17 is formed of a plastic film strip having a first section 17a adapted to be permanently bonded to the second topsheet 31 of the second panel 12 and a second section 17b releasably attached to the second backsheet 32 and adapted to be pressure-sensitively attached to the wall surface W. The surface of the second section 17b facing the secondbacksheet 32 is coated with pressure-sensitive adhesive (not shown). The front end 38 of the second panel 12 indicated by the imaginary lines is secured to the wall surface W through this pressure-sensitive adhesive.

While the pet urine collection device 10 is designed so that it may be effectively used in the usage pattern as described above, it is preferable for implementation of this usage pattern to determine the most appropriate height from the floor surface F to the position at which the second section 17b of the pressure-sensitive adhesive tape 17 adapted to be attached to the wall surface W. If the position of the second section 17b is excessively high, the first panel 11 might be separated upwardly from the floor surface F in the vicinity of the join line 13 and slant from the rear end 16 toward the front end 15 on the down grade. In the first panel 11 slanting in this manner, at the moment that the flow of urine discharged against the second panel 12 has attained to the first panel 11, the flow of urine may flash toward the front end 15 and, even if the amount of urine is relatively small, the first panel 11 might be soiled over a wide region in the front-back direction Z. The dog often hesitates to step into such region and, in consequence, frequency of exchanging the pet urine collection device 10 will be increased and an economic burden for the guardian will be correspondingly increased. Should the dog step into such sloped first panel 11, a downward tensile force will act on the pressure-sensitive adhesive tape 17 through the second panel 12 and the pressure-sensitive adhesive tape 17 might be peeled off the wall surface W. From these viewpoints, it is undesirable to set the second section 17b on the wall surface W at an excessively high position.

For the pet urine collection device 10, there is another pattern of selecting the position of the pressure-sensitive adhesive tape 17 in the vertical direction Y of the wall surface W and, according to this pattern, the tape 17 is set at a position lower than the position illustrated in Fig. 3. This pattern will be described in more detail with reference to Fig. 3.

Fig. 3 is a view similar to Fig. 2, illustrating how to select a position of the second section 17b of the pressure-sensitive adhesive tape 17. The second panel 12 indicated by the imaginary lines is in the same state as the state of the second panel 12 illustrated in Fig. 2. In the second panel 12 indicated by the solid lines, a position of the pressure-sensitive adhesive tape 17 on the wall surface W is lower than the position of the pressure-sensitive adhesive tape 17 indicated by the imaginary lines. When the position of the pressure-sensitive adhesive tape 17 is relatively low, the second panel 12 is deflected. This deflection is convex toward the wall surface W and, in the second panel 12 deflexed in this manner, the high stiffness region 36 tilts from the join line 13 to the front end 36a, namely, toward the front side of the pet urine collection device 10 so as to form a rising slope. The low stiffness region 39 tilts from the front end 36a of the high stiffness region 36 toward the wall surface W, in other words, toward the rear end of the pet urine collection device 10 so as to form a rising slope. Specifically, the high stiffness region 36 in the second panel 12 is the region functioning to deform a part of the second panel 12 so as to define the slope rising forward and the low stiffness region 37 is the region functioning to deform another part of the second panel 12 so as to define the slope rising rearward.

Figs. 4 and 5 illustrate a differential behavior of the high stiffness region 36 and the low stiffness region 37. Fig. 4 is a perspective view of a tester 60 used to confirm such differential behavior and a test piece 65 used together with the tester 60 and Fig. 5 is a series of schematic diagram illustrating the behaviors of the high stiffness region 36 and the low stiffness region 37 in successive steps (a) through (d).

The tester 60 illustrated in Fig. 4 has a smooth horizontal surface 61 and a smooth sloping surface 62 intersecting with the horizontal surface 61 along a front end edge 61a thereof at an angle of 45° relative to the horizontal surface 61. The test piece 65 is a strip specimen which was cut out from the second panel 12 of the pet urine collection device 10 and includes the high stiffness region 36 and the low stiffness region 37 arranged in the front-back direction Z in Fig. 2. The test piece 65 was prepared in a predetermined cutout dimension so that a length dimension P of the high stiffness region 36 in the front-back direction Z is 10 mm and a length dimension Q of the low stiffness region 37 in the front-back direction Z is at least 50 mm. The cutout dimension R of the test piece 65 in the transverse direction X is predetermined to be 10 mm. For example, the respective length dimensions P, Q and R of the test piece 65 may be predetermined to be 10, 90 and 10 mm, respectively. Of the test piece 65 illustrated in Fig. 4, the upper surface is defined by the second topsheet 31 and the lower surface is defined by the secondbacksheet 32. The second absorbent structure 33 is visible along a side surface of the high stiffness region 36 in the test piece. The test piece 65 is placed on the horizontal surface 61 of the tester 60 so that the second backsheet 32 may face the horizontal surface 61 and slid forward in a direction indicated by an arrow S until the test piece partially projects beyond the front end edge 61a above the sloping surface 62 under a controlled operation of a trier's fingertip. In this regard, the direction indicated by the arrow S points the front side as viewed in the front-back direction Z in Fig. 2.

ReferringtoFig. 5 (a), the test piece 65placedonthehorizontal surface 61 is being slid, with the low stiffness region 37 in front, in the direction indicated by the arrow S . The low stiffness region 37 begins to sag toward the sloping surface 62 as the low stiffness region 37 projects beyond the front end edge 61a and, when the front end 36a of the high stiffness region 36 is slid to the front end edge 61a of the horizontal surface 61 or the vicinity thereof, the low stiffness region 37 completely sags along the sloping surface 62.

Fig. 5 (b) illustrates the test piece 65 in which the high stiffness region 36 indicated by the imaginary lines in Fig. 5 (a) has been further slid forward in the direction indicated by the arrow S. As illustrated, a part of the high stiffness region 36 still remains on the horizontal surface 61 but the rest projects beyond the front end edge 61a of the horizontal surface 61. Owing to high stiffness of itself, the high stiffness region 36 does not sag at all or substantially. The low stiffness region 37 hangs down from the front end 36a of the high stiffness region 36.

Fig. 5 (c) illustrates the test piece 65 placed on the horizontal surface 61 in a manner that the high stiffness region 36 is located on the front side and the low stiffness region 37 is located on the rear side as viewed in the direction indicated by the arrow S. When the high stiffness region 36 in the test piece 65 is slid forward in the direction indicated by the arrow S and a rear end of the high stiffness region 36 comes at the front end edge 61a of the horizontal surface 61, the low stiffness region 37 is bent along the front end edge 61a of the horizontal surface 61 and, in consequence, the high stiffness region 36 extends along the sloping surface 62 (See the high stiffness region 36 indicated by imaginary lines).

Fig. 5 (d) illustrates the test piece 65 having been moved further forward. The high stiffness region 36 slides down along the sloping surface 62 and the low stiffness region 37 is bend along the front end edge 61a of the horizontal surface 61 so that a part thereof may extend along the sloping surface 62.

As will be apparent from Fig. 5, in the test piece 65 cut out from the second panel 12 of the pet urine collection device 10, the low stiffness region 37 is the region adapted to be smoothly bent along the front end 36a of the high stiffness region 36 (See (b) and (c) of Fig. 5) and the high stiffness region 36 is the region which does not sag at all or substantially and come in contact with the sloping surface 62 (See (b) and (c) of Fig. 5).

Referring again to Fig. 3, the direction of tilt is reversed between the high stiffness region 36 and the low stiffness region 37 of the second panel 12 and, when urine is discharged against the upper portion, namely, the low stiffness region 37 of the second panel 12, at least a portion of discharged urine transfers to the high stiffness region 36 as indicated by an arrow C so as to be partially absorbed by the high stiffness region 36 and the rest of urine flows along the surface of the high stiffness region 36 toward the join line 13, namely, rearward. Such course followed by urine to transfer and to be absorbed is advantageously effective to prevent the first panel 11 from being soiled with urine over a wide range including the front end 15 thereof. Meanwhile, it is also possible to prevent a body of the dog in front of the high stiffness region 36 from being soiled with urine which otherwise would flash frontward. In this regard, the second backsheet 32 is used so as to extend between the proximal edge 41 and the distal edge 42 and consequently any amount of urine transferring through the second panel 12 should not seep out through the second panel 12 to the side of the wall surface W.

According to a preferred embodiment of the pet urine collection device 10, a sum of a length dimension L1 of the second panel 12 measured in the high stiffness region 36 and a length dimension L2 of the second panel 12 measured in the low stiffness region 37 is in a range of 100 to 600 mm and the length dimension L1 is equal to the length dimension L2 or smaller than the length dimension L2. In this regard, the length dimension L1 is not smaller than 10 mm in any case. Such relationship between the length dimensions L1 and L2 is preferable to shield urine discharged against the wall surface W first by the low stiffness region 37 and to assure that the high stiffness region 36 and the low stiffness region 37 define the cross-sectional shape of the second panel 12 as illustrated in Fig. 3. The other length dimensions in the first panel 11 and the second panel 12, for example, respective length dimensions in the transverse direction X and the respective length dimensions in the front-back direction Z are not specified and may be appropriately selected depending on, for example, a size of a pet animal for which the pet urine collection device 10 is used or an area available to use the pet urine collection device 10.

In the pet urine collection device 10 having such advantageous behavior and effect, as material for the liquid-permeable first and second topsheets 21, 31, use nonwoven fabric formed of thermoplastic synthetic fiber and modified to be hydrophilic or perforated plastic film modified to be hydrophilic at least along peripheries of the respective perforations. An example of the nonwoven fabric useful for this purpose is a point-bond nonwoven fabric formed of polypropylene fibers having a fineness in a range of 1 to 7 dtex and a mass per unit area in a range of 10 to 30 g/m².

As material for the liquid-impermeable first and second backsheets 22, 32, a plastic film, for example, a polyethylene film having a thickness in a range of 0.01 to 0.2 mm may be used. The first topsheet 21 and the first backsheet 22 may be bonded to each other with use of for example a hot melt adhesive at a rate of 0.3 to 50 g/m². The second topsheet 31 and the second backsheet 32 may be also bonded to each other with use of for example a hot melt adhesive at a rate of 0.3 to 50 g/m². A coating amount of hot melt adhesive per unit area may sometimes remarkably depend on a type of the coater used for this purpose.

As the first and second absorbent structures 23, 33, water-absorbent material such as fluff wood pulp or superabsorbent polymer particles wrapped with a liquid-permeable wrapping sheet formed of tissue paper or a nonwoven fabric, more preferably with a wrapping sheet having high liquid-permeability and high liquid-diffusivity may be used. The superabsorbent polymer particles may be used in a state of existing together with the fluff wood pulp, for example, in a state of being mixed with the fluff wood pulp or in a state of being alternately layered with the fluff wood pulp. An amount of the water-absorbent material used per unit area is preferably in a range of 40 to 300 g/m². Of the amount of the water-absorbent material used, the moiety of the superabsorbent polymer particles is preferably in a range of 0 to 60% by mass. As examples of the superabsorbent polymer particles, polyacrylic acid, polyacrylate, starch-acrylonitrile polymers, polyvinyl alcohol, polyvinyl ether, polyacrylamide, carboxymethyl cellulose and natural polysaccharide are known.

Fig. 6 is a view similar to Fig. 2, illustrating an embodiment of the pet urine collection device 10. In this regard, Fig. 6 illustrates the second panel 12 still not attached to the wall surface W.

In the pet urine collection device 10 illustrated in Fig. 6, the rear end 16 of the first panel 11 is contiguous to the rear end 39 of the second panel 12. In other words, the first topsheet 21 is contiguous to the second topsheet 31, the first backsheet 22 is contiguous to the second backsheet 32 and the first absorbent structure 22 is contiguous to the second absorbent structure 33. With such pet urine collection device 10, when urine flowing in the direction of the arrow C is absorbed by the high stiffness region 36, this urine partially may diffuse from the rear end 39 toward the rear end 16 and be absorbed by the first absorbent structure 23. In consequence, prevent the high stiffness region 36 from coming into a saturated state.

Fig. 7 is a view similar to Fig. 4, illustrating another embodiment of the pet urine collection device 10. The second panel 12 illustrated in Fig. 7 includes a hydrophilic or water-absorbent second topsheet 31, a liquid-impermeable second backsheet 32 and a stiffness enhancing member 51 wherein the first topsheet 21 is joined to the stiffness enhancing member 51 along a join line 13. The stiffness enhancing member 51 is used as a substitute for the second absorbent structure 33 so that the region of the second panel 12 having the stiffness enhancing member 51 attached thereto becomes the high stiffness region 36 and the remaining region becomes the low stiffness region 37. As the stiffness enhancing member 51, for example, one or more nonwoven fabric sheets or a plastic film sheet having appropriate bending stiffness, respectively, or a cellular plastic sheet having appropriate flexibility may be used. To attach the stiffness enhancing member 51 to the second topsheet 31, an adhesive agent such as a hot melt adhesive may be used. While it is not needed for the second topsheet 31 in Fig. 5 to be liquid-permeable since the second topsheet 31 is not used for the purpose of wrapping the absorbent structure, the second topsheet 31 is preferably hydrophilic or water-absorbent so as to be capable of receiving the amount of urine discharged against the second panel without rebounding this. An example of such second topsheet 31 is a nonwoven fabric sheet formed of thermoplastic synthetic fibers and processed so as to become hydrophilic. Such thermoplastic synthetic fibers may include crimped thermoplastic synthetic fibers.

Referring to Fig. 7, a stiffness enhancing member 52 indicated by imaginary lines is used together with the stiffness enhancing member 51 or as a substitute for the stiffness enhancing member 51. The stiffness enhancing member 52 may be formed from the same material for the stiffness enhancing member 51 but this stiffness enhancing member 52 is attached to the second backsheet 32. When the stiffness enhancing member 51 is not used, the line 13 is formed so as to join the first topsheet 21 and the second topsheet 31 to each other. Above this join line 13, the high stiffness region 36 is defined by the stiffness enhancing member 52.

Fig. 8 also is a view similar to Fig. 5, illustrating still another embodiment of the pet urine collection device 10. In the embodiment illustrated in Fig. 8, the first topsheet 21 is contiguous to the second topsheet 31 and the first backsheet 22 is contiguous to the second backsheet 32 on the rear side of the pet urine collection device 10. In the pet urine collection device 10 according to this embodiment, it is possible for the first and second backsheets 22, 32 to prevent urine from leaking rearward. It is also possible for the second topsheet 31 to diffuse the amount of urine having been absorbed by the second topsheet 31 toward the first topsheet 21 so long as the second topsheet 31 is capable of diffusing urine. In the second panel 12, the portion having the stiffness enhancing member 51 attached thereto defines the high stiffness region 36.

While the pet urine collection device 10 having been illustrated and described hereinabove is suitable for small dog raised indoors, the pet urine collection device according to the present invention is useful without regard for species of pet animals and regardless whether the pet urine collection device is used indoors or outdoors.

### {Reference Signs List}

- 10: pet urine collection device
- 11: first panel region
- 12: second panel region
- 13: join line
- 21: topsheet (first topsheet)
- 22: backsheet (first backsheet)
- 23: first absorbent structure
- 31: liquid-permeable sheet (second topsheet)
- 32: liquid-impermeable sheet (second backsheet)
- 33: second absorbent structure
- 36: high stiffness region
- 37: low stiffness region
- 41: proximal edge region
- 42: distal edge region
- 51: stiffness enhancing member
- 52: stiffness enhancing member
- F: floor surface
- W: wall surface

## Claims

1. A pet urine collection device (10) including
a first panel (11) adapted to be laid on a horizontal floor surface to absorb urine and composed of a liquid-permeable topsheet (21), a liquid-impermeable backsheet (22) and a first absorbent structure (23) interposed between the top-and backsheets; and
a second panel (12) and a flexible second panel having a proximal edge (41) joined to the topsheet (21) along a straight join line (13), a distal edge (42) adapted to be attached to a wall surface vertically extending from the floor surface and a liquid-impermeable sheet (32) extending between the proximal edge and the distal edge, wherein:
a high stiffness region (36) having the proximal edge (41) and extending in parallel to the join line (13) and a low stiffness region (37) having the distal edge (42) between the proximal edge and the distal edge of the second panel (12), a high stiffness (36) region having the proximal edge (41) and extending in parallel to the join line (13) and a low stiffness region (37) having the distal edge (42) and extending in parallel to the high stiffness region (36) are formed; and
in a direction extending from the proximal edge (41) toward the distal edge (42), a dimension of the high stiffness region (36) is the same to or smaller than a dimension of the low stiffness region (37).

2. The pet urine collection device according to Claim 1, wherein the high stiffness region (36) includes the liquid-impermeable backsheet (32), the liquid-permeable sheet (31) and a second absorbent structure (33) interposed between these two sheets so that the liquid-impermeable faces the wall surface.

3. The pet urine collection device according to Claim 1 or 2, wherein the liquid-impermeable backsheet (22) and the liquid-impermeable sheet (32) are formed, respectively, of one of a sheet of a nonwoven fabric made of thermoplastic synthetic fibers and a sheet of a thermoplastic synthetic resin film

4. The pet urine collection device according to Claim 2, wherein the lower stiffness region (37) is formed from a laminate of the liquid-impermeable sheet (32) and the liquid-permeable sheet (31).

5. The pet urine collection device according to Claim 1 or 2, wherein the high stiffness region (36) extends not only in a direction extending from the proximal edge (41) toward the distal edge (42) but also extends in the reverse direction beyond the join line (13).

6. The pet urine collection device according to Claim 2, wherein the first absorbent structure (23) and the second absorbent structure (33) are contiguous to each other in the reverse direction.

7. The pet urine collection device according to Claim 1 or 2, wherein the high stiffness region (36) is formed by attaching a stiffness enhancing member (51, 52) for local enhancement of the stiffness of the second panel (12) to at least one of a surface adapted to face the wall surface when the second panel (12) is attached to the wall surface and a surface opposite to the surface adapted to face the wall surface.

8. The pet urine collection device according to Claim 1 or 2, wherein the second panel (12) is provided between the proximal edge (41) and the distal edge (42) thereof with means to attach the second panel (12) to the wall surface in a manner that the distal edge (42) is located above.

## Patentansprüche

1. Urinsammelvorrichtung (10) für Haustiere umfassend:
ein erstes Panel (11), das ausgebildet ist, auf eine horizontalen Bodenfläche gelegt zu werden, um Urin zu absorbieren, und aus einer flüssigkeitsdurchlässigen Oberlage (21), einer flüssigkeitsundurchlässigen Rücklage (22) und einer ersten absorbierenden Struktur (23), die zwischen der Oberlage und der Rücklage eingelegt ist, zusammengesetzt ist; und
ein zweites Panel (12) und ein flexibles zweites Panel weisen eine mit der Oberlage (21) entlang einer geraden Verbindungslinie (13) verbundene proximale Kante (41) und eine distale Kante (42) auf, die ausgebildet ist, an einer Wandfläche, die sich vertikal von der Bodenfläche erstreckt, und eine flüssigkeitsundurchlässige Lage (32), die sich zwischen der proximalen Kante und der distalen Kante erstreckt, befestigt zu werden, wobei:
ein Bereich hoher Steifigkeit (36) mit der proximalen Kante (41) und sich parallel zu der Verbindungslinie (13) erstreckend und ein Bereich niedriger Steifigkeit (37) die distale Kante (42) zwischen der proximalen Kante und der distalen Kante des zweiten Panels (12) aufweisend, ein Bereich hoher Steifigkeit (36) mit der proximalen Kante (41) und sich parallel zu der Verbindungslinie (13) erstreckend und ein Bereich niedriger Steifigkeit (37) die distale Kante (42) aufweisend und sich parallel zum Bereich hoher Steifigkeit (36) erstreckend gebildet werden, und
in einer sich von der proximalen Kante (41) zur distalen Kante (42) erstreckenden Richtung eine Abmessung des Bereichs hoher Steifigkeit (36) gleich oder kleiner ist als eine Abmessung der Bereichs niedriger Steifigkeit (37).

2. Urinsammelvorrichtung für Haustiere nach Anspruch 1, wobei der Bereich hoher Steifigkeit (36) die flüssigkeitsundurchlässige Rücklage (32), die flüssigkeitsdurchlässige Lage (31) und eine zweite absorbierende Struktur (33), die zwischen diesen beiden Lagen eingelegt ist, so dass die flüssigkeitsundurchlässige der Wandfläche zugewandt ist, umfasst.

3. Urinsammelvorrichtung für Haustiere nach Anspruch 1 oder 2, wobei die flüssigkeitsundurchlässige Rücklage (22) und die flüssigkeitsundurchlässige Lage (32) jeweils aus einer Lage eines Vliesstoffes aus thermoplastischen synthetischen Fasern oder einer Lage aus einer thermoplastischen Kunstharzfolie gebildet sind.

4. Urinsammelvorrichtung für Haustiere nach Anspruch 2, wobei der Bereich niedriger Steifigkeit (37) aus einem Laminat aus der flüssigkeitsundurchlässigen Lage (32) und der flüssigkeitsdurchlässigen Lage (31) gebildet wird.

5. Urinsammelvorrichtung für Haustiere nach Anspruch 1 oder 2, wobei der Bereich hoher Steifigkeit (36) sich nicht nur in einer Richtung von der proximalen Kante (41) zur distalen Kante (42), sondern sich auch in umgekehrter Richtung über die Verbindungslinie (13) erstreckt.

6. Urinsammelvorrichtung für Haustiere nach Anspruch 2, wobei die erste absorbierende Struktur (23) und die zweite absorbierende Struktur (33) zueinander in der Gegenrichtung aneinander angrenzen

7. Urinsammelvorrichtung für Haustiere nach Anspruch 1 oder 2, wobei der Bereich hoher Steifigkeit (36) durch Anbringen eines Steifigkeitserhöhungselements (51, 52) zur lokalen Erhöhung der Steifigkeit des zweiten Panels (12) auf zumindest eine Oberfläche, die ausgebildet ist, der Wandfläche zugewandt zu sein wenn das zweite Panel (12) an der Bandoberfläche befestigt ist, oder eine Oberfläche gegenüberliegend zur Oberfläche, die ausgebildet ist, der Wandoberfläche zugewandt zu sein, gebildet ist.

8. Urinsammelvorrichtung (10) für Haustiere nach Anspruch 1 oder 2, wobei das zweite Panel (12) zwischen dessen proximaler Kante (41) und distalen Kante (42) mit Mitteln versehen ist, das zweite Panel (12) an der Wandoberfläche in einer Weise zu befestigen, dass die distale Kante (42) oben liegt.

## Revendications

1. Dispositif de collecte d'urine pour animal de compagnie (10) comprenant :
un premier panneau (11) adapté pour être posé sur une surface de sol horizontale pour absorber l'urine et composé d'une feuille supérieure perméable aux liquides (21), d'une feuille arrière imperméable aux liquides (22) et d'une première structure absorbante (23) intercalée entre les feuilles supérieure et arrière ; et
un deuxième panneau (12) et un deuxième panneau souple ayant un bord proximal (41) relié à la feuille supérieure (21) le long d'une ligne de jonction rectiligne (13), un bord distal (42) adapté pour être fixé à une surface de paroi s'étendant verticalement à partir de la surface de sol et une feuille imperméable aux liquides (32) s'étendant entre le bord proximal et le bord distal, dans lequel :
une région à grande rigidité (36) ayant le bord proximal (41) et s'étendant parallèlement à la ligne de jonction (13) et une région à faible rigidité (37) ayant le bord distal (42) entre le bord proximal et le bord distal du deuxième panneau (12), une région à grande rigidité (36) ayant le bord proximal (41) et s'étendant parallèlement à la ligne de jonction (13) et une région à faible rigidité (37) ayant le bord distal (42) et s'étendant parallèlement à la région à grande rigidité (36) sont formées ; et
dans une direction s'étendant du bord proximal (41) vers le bord distal (42), une dimension de la région à grande rigidité (36) est égale ou inférieure à une dimension de la région à faible rigidité (37).

2. Dispositif de collecte d'urine pour animal de compagnie selon la revendication 1, dans lequel la région à grande rigidité (36) comprend la feuille arrière imperméable aux liquides (32), la feuille perméable aux liquides (31) et une deuxième structure absorbante (33) intercalée entre ces deux feuilles de sorte que l'imperméable aux liquides fasse face à la surface de paroi.

3. Dispositif de collecte d'urine pour animal de compagnie selon la revendication 1 ou 2, dans lequel la feuille arrière imperméable aux liquides (22) et la feuille imperméable aux liquides (32) sont formées, respectivement, d'une parmi une feuille d'un textile non tissé réalisé en fibres synthétiques thermoplastiques et une feuille d'un film de résine synthétique thermoplastique.

4. Dispositif de collecte d'urine pour animal de compagnie selon la revendication 2, dans lequel la région à faible rigidité (37) est formée à partir d'un stratifié de la feuille imperméable aux liquides (32) et de la feuille perméable aux liquides (31).

5. Dispositif de collecte d'urine pour animal de compagnie selon la revendication 1 ou 2, dans lequel la région à grande rigidité (36) s'étend non seulement dans une direction s'étendant du bord proximal (41) vers le bord distal (42) mais s'étend aussi dans la direction inverse au-delà de la ligne de jonction (13).

6. Dispositif de collecte d'urine pour animal de compagnie selon la revendication 2, dans lequel la première structure absorbante (23) et la deuxième structure absorbante (33) sont contiguës l'une à l'autre dans la direction inverse.

7. Dispositif de collecte d'urine pour animal de compagnie selon la revendication 1 ou 2, dans lequel la région à grande rigidité (36) est formée par fixation d'un élément améliorant la rigidité (51, 52) pour l'amélioration locale de la rigidité du deuxième panneau (12) sur au moins une parmi une surface adaptée pour faire face à la surface de paroi lorsque le deuxième panneau (12) est fixé à la surface de paroi et une surface opposée à la surface adaptée pour faire face à la surface de paroi.

8. Dispositif de collecte d'urine pour animal de compagnie selon la revendication 1 ou 2, dans lequel le deuxième panneau (12) est fourni entre le bord proximal (41) et le bord distal (42) de celui-ci avec des moyens pour fixer le deuxième panneau (12) à la surface de paroi d'une manière telle que le bord distal (42) est situé au-dessus.
